# EUROPEAN PATENT SPECIFICATION

(11) **EP 3 882 894 B1**
(45) Date of publication and mention of the grant of the patent: **19.01.2022**
(21) Application number: 20164253.5
(22) Date of filing: 19.03.2020
(51) Int. Cl.: G09B 21/00

(54) **SEEING AID FOR A VISUALLY IMPAIRED INDIVIDUAL**
SEHHILFE FÜR EINEN SEHBEHINDERTEN MENSCHEN
AIDE VISUELLE POUR UN INDIVIDU MALVOYANT

(43) Date of publication of application: 22.09.2021
(73) Proprietor: Alshehri, Hassan Ali, 14928-7586 Riyadh (SA)
(72) Inventor: Alshehri, Hassan Ali, 14928-7586 Riyadh (SA)
(74) Representative: Hofmann, Matthias

(56) References cited:
- CN-A- 108 446 641
- DE-A1- 10 248 534
- US-A1- 2013 245 396
- US-A1- 2018 321 056

## Description

### TECHNICAL FIELD

The present invention relates to seeing aid for a visually impaired pedestrian and method for assisting a visually impaired pedestrian. The present invention also relates to a computer-readable storage medium storing program code, the program code comprising instructions for carrying out such a method.

### BACKGROUND

According to the World Health Organization, globally, more than 2,2 billion people have some kind of a vision impairment, of which 39 million are blind. 82% of all blind are 50 years of age, which means that ageing populations will have even more visually impaired and blind people.

Blind people or people with severe visual impairments face many difficulties in their daily life. Not only can they not recognize people they meet, for example on the street, but they are also in danger because they may not perceive a fast approaching car or other dangerous objects. Also, they cannot read books, newspapers, banners or text messages. Guide dogs can be a valuable assistance for blind people; however, their training is time-consuming and expensive, and their communication with the blind person is limited to basic instructions or feedback. For example, they cannot tell their owner the name of a person they meet during a walk. Also, a guide dog cannot explain street signs or other visual elements. A blind person may call an assistant and obtain help, however, in this way the blind or visually impaired person is always reliant on outside assistance.

Thus, there is a need for an advanced seeing aid, which can help a blind or visually impaired person, in particular a pedestrian, in everyday situations.

US 2013/245396 A1 discloses a mental state analysis that may be performed using a wearable-camera device. Embodiments provide a glasses mounted camera or an ear-mounted device comprising a camera to collect mental state data of an individual being viewed. Information about the mental states of the individual being viewed can be fed back to the individual wearing the wearable-camera device via visual, verbal, or tonal indicators. Various emotional indicators can be provided to the wearer of the device. Analysis of the mental state data of the person being observed can be performed on the wearable-camera device, on a mobile platform, on a server, or a combination there of. Shared and aggregated mental state information may be shared via social networking. A geographical representation of the mental state information may be rendered.

CN 104 983 511 A discloses a voice-assisted smart glasses system for patients with total blindness and visual impairment.

US 2019/362149 A1 discloses devices, systems, and methods for providing auditory sensory substitution using an assistive device. Objects in the real-world are observed by a depth camera and classified. The classification is used to identify a sound corresponding to the object. In some cases, the position of the object can also be used to identify the sound. The device is configured to permit vision-impaired players to participate in athletic events.

### SUMMARY OF THE INVENTION

The objective of the present invention is to provide a seeing aid for a visually impaired pedestrian and a method for assisting a visually impaired pedestrian, which overcome one or more of the above-mentioned problems of the prior art.

A first aspect of the invention provides a seeing aid for a visually impaired pedestrian, wherein the seeing aid comprises:
- a camera for recording an image of an environment of the pedestrian,
- a processing unit for processing the image to obtain verbal information about the environment, and
- an output unit for outputting the verbal information as spoken language in order to notify the pedestrian about the environment,
wherein the processing unit comprises a machine learning unit configured to learn a correspondence between an image of an object and a name of the object, wherein the seeing aid further comprising an audio input unit configured to record speech and/or verbal commands from the pedestrian, wherein the seeing aid is configured to control the machine learning unit to learn a correspondence between the image and the name of the object if the pedestrian speaks the name while the camera is pointed at the object.

The seeing aid of the first aspect can comprise one or more cameras. In particular, the cameras can be a pair of cameras, such that depth information can be obtained from the images. It is also possible that the seeing aid comprises two cameras which have different focal lengths and thus are suitable for obtaining sharp images from objects that are either near or far from the pedestrian.

The seeing aid may in particular comprise an infrared camera. Thus, even in near darkness, the infrared camera can detect persons, objects or text. The infrared camera can be used continuously or can be configured to be used only when a signal from a (visible light) camera is too low, e.g. lower than a predetermined threshold.

The processing unit for processing the image may for example comprise a microprocessor. It is understood that the processing unit may include a processing system, wherein information is transmitted wirelessly between components of the processing system. For example, images from the camera may be transmitted wirelessly to the processor of a smart phone, processed in the smart phone, and instructions for generating the output wirelessly transmitted to the output unit. In this regard, the processor of the smart phone is a part of the processing unit of the seeing aid. In other embodiment, some of the processing maybe outsourced to processing in the cloud, thus, the corresponding may be part of the processing unit of the seeing aid. This has the advantage that processing intense and therefore energy demanding tasks can be performed remote from the seeing aid and energy consumption can be distributed.

In further embodiments, the seeing aid can comprise an integrated connectivity unit, which for example can comprise a built-in SIM card for connecting to telecommunication networks such as LTE-based communication networks. This can allow the seeing aid to directly connect to cloud-based services.

The processing unit may comprise a neural network, in particular a convolutional neural network, wherein the neural network may be implemented as software and/or hardware.

The audio output unit maybe a loudspeaker or a bone conduction transducer.

The seeing aid can be used by a pedestrian, however, it is understood that this does not exclude that the seeing aid can also be used at other occasions, for example, when a user is sitting in a chair and looking out of the window, or when the user is reading a book in any language. Therefore, in the following it will just be referred to the user of the seeing aid.

In a first implementation of the seeing aid according to the first aspect, the seeing aid is designed to be worn as glasses or the seeing aid is designed to be attached to a pair of glasses. Thus, embodiments provide a module that comprises e.g. a through-hole such that the arm of the glasses can be moved through the through-hole of the module such that the module can be attached to existing glasses. Alternatively, the module can be provided with a small clip such that it can be attached onto existing glasses by clipping it to a part, e.g. one of the arms, of the glasses. This has the advantage that the user can keep using his existing spectacle frame. This may be advantageous in particular for users who are not completely blind, but who require special glasses which they want to continue to use.

The seeing aid can be a pair of glasses, wherein the camera, the processing unit and the output unit are integrated into the glasses. Alternatively, only some parts of the seeing aid are integrated into the glasses. For example, the input unit and output unit can be integrated into the glasses, but the processing unit or parts of the processing unit can be arranged separate from the glasses.

In preferred embodiments, the seeing aid is provided as an add-on module for existing glasses.

The verbal information about the environment may be e.g. a description of a scene in the environment or about an individual object in the environment. The verbal information about the environment may also comprise the text of a book that the user is reading. In other words, the seeing aid can read a book to its user.

It is understood that a blind person may not need the lenses that are provided by the glasses. Nonetheless, it can be preferable that the seeing aid is designed in the form of glasses. This has the advantage that the seeing aid is easy to carry for the blind person and the cameras are located in a position high above the ground, such that they can get a good overview of the scene in front of the blind person. Also, the blind person can direct the seeing aid to different objects simply by rotating the head.

In alternative embodiments, the seeing aid is not as glasses, but as a module that can be attached to clothes or a body part. For example, the seeing aid can include a module that comprises a camera and that is attached by clipping to shirt or trousers of the user.

In a further implementation of the seeing aid according to the first aspect, the audio output unit comprises one of earphones, a hearing aid, a cochlear implant, and a bone conduction implant. This has the advantage that the blind person can receive verbal information, e.g. speech, generated from the seeing aid even in noisy environments and even if the blind or visually impaired person also has impaired hearing. Ultimately, the seeing aid can provide assistance even to users who are fully blind and who are deaf or nearly deaf.

Preferably, the information comprises a detailed textual description of a scene in the environment, wherein the audio output unit is configured to generate speech as output corresponding to the textual description. This has the advantage that the blind person can obtain detailed information about a scene in front of the seeing aid. The seeing aid can be designed such that when the pedestrian is not moving and keeps directing the glasses with the cameras to a same scene or object, the seeing aid keeps generating more textual description, i.e., describing the scene in more detail. Optionally, the seeing aid can be designed to stop providing scene description if the user is shaking the head. The headshake can be determined either by a motion sensor integrated into the seeing aid or by evaluating the images to detect a sudden horizontal movement or horizontal rotation of the head.

The seeing aid can be configured to switch between a plurality of modes. For example, the plurality of modes can include a seeing mode and a reading mode. In the seeing mode the seeing aid is configured to provide information about objects, faces, locations, etc. in the general environment of the user. The seeing aid can be configured to be by default in a seeing mode.

In reading mode, the seeing mode can be configured to be focused on text in the environment of the user. The text can be for example the text of a book, of a newspaper or of an electronic device such as a table or mobile phone.

Preferably, the seeing aid can be configured to, while in reading mode, detect any text and notify the user that there is a text to read. For example, this notification can be performed by issuing a specific audio signal, such as beep tone, or a vibration of a vibration unit.

If the user approves, then the seeing aid will perform optical character recognition (OCR) and convert text in an acquired image into an audio note to be sent to the audio output unit, e.g. earphones. This allows the user to use the seeing aid to read any text in any language. For example, the seeing aid can comprise a translation unit, which translates the text as detected using the OCR into a different language. For example, the translation unit of the seeing aid can be configured to translate any recognized text into the preferred language of the user. Thus, the input can be in different languages, but the output will always be in the user-preferred language. For example, one page may contain many paragraphs in Chinese, Arabic, French, etc., and these will be all be translated into one language (preference user language) such as English, and the generated translation can be output to the user via the audio output unit, e.g. the earphones.

The seeing aid can be configured to switch automatically between different modes, e.g. the seeing aid can be configured to switch from seeing mode to reading mode if the user is pointing the camera for an extended time to a longer text passage, e.g. a book. Alternatively, the seeing aid can be configured to switch between the modes based on an explicit command from the user. For example, the explicit command can be a predefined voice command from the user or the press of a button. For example, the button for switching modes can be located at the side of the glasses, if the seeing aid is implemented as a pair of glasses.

This implementation has the advantage that the pedestrian can communicate with the seeing aid just by speech, without for example having to touch buttons.

If the seeing aid is designed to be worn as a pair of glasses, the microphones maybe located on the glasses. Alternatively, they may be located elsewhere, for example the microphone of a smart phone that is wirelessly connected to the main part of the seeing aid may be used. In this case, the pedestrian may carry the smart phone in his pocket and take the smart phone out from the pocket and hold the smart phone's microphone to his mouth when he wants to give commands to the seeing aid.

In a further implementation of the seeing aid of the first aspect, the audio output unit is configured to generate ambisonic audio, wherein the ambisonic audio gives the pedestrian the impression of sound coming from a specific spatial direction that corresponds to a direction of a detected object relative to the pedestrian.

Ambisonic audio herein refers to any audio generation that, using headphones, uses only two audio sources (left and read part of the headphone), but perform signal processing such that for the user it seems like the origin of the sound is from a specific spatial direction, e.g. above, below, behind or besides the user.

This implementation has the advantage that the seeing aid can easily inform the user about the location of an object without having to describe this through speech output.

In another implementation, the seeing aid generates an audio signal where a frequency and/or a volume of the audio signal correspond to a size and/or a proximity of a detected object relative to the pedestrian. This represents an alternative, easy to implement, solution for informing the user about objects around him.

In a further implementation of the seeing aid of the first aspect, the output unit comprises a plurality of vibration units, wherein the seeing aid is configured to notify the pedestrian about a position of an object relative to the pedestrian by controlling the plurality of vibration units.

For example, the seeing aid may comprise a first and a second vibration unit, wherein the first vibration unit is designed to be in touch with contact with the left side of the head of the user and the second vibration unit is designed to be in touch with the right side of the head of the user. Thus, a vibration of the first vibration unit can notify the user about a object on the left, whereas a vibration of the second vibration unit can notify the user about an object on the right side. The vibration unit may be a bone conduction transducer and may in addition act as audio output unit.

Preferably, an intensity of vibration of one or more of the plurality of vibration units corresponds to a size and/or proximity of an object that the processing unit has detected in the image. In this regard, a strong vibration can notify the user about an object that is large and or close and thus potentially represents a danger for the user.

Optionally, the plurality of vibration units are arranged such that when the seeing aid is in place, they form a circle around the head of the pedestrian. This allows the plurality of vibration units to quickly notify the user about a relative location of an object. For example, a vibration unit that is located to touch the user's head near the left side of the forehead may notify the user about an object that is on the left side in front of the user.

Optionally, the plurality of vibration units may be configured to vibrate in a specific sequence. For example, the vibration units can be configured such that vibration units located more towards the forehead of the user vibrate first, followed by a vibration of a vibration unit that is located at the back of the head of the user. This could indicate to the user that the object that the audio output unit is currently describing is currently moving towards the user. In other words, a sequence of vibrations of the vibration units may indicate to the user a movement direction of an object, in particular a movement direction of an object that the audio output unit is currently describing.

Instead of the vibration unit(s), also alternative components can be used to notify the user, for example a Peltier element can be used to generate a sensation of heat or cold.

In a further implementation of the seeing aid of the first aspect, the seeing aid further comprises an audio input unit configured to record speech and/or verbal commands from the pedestrian. This allows the user to easily give commands to the seeing aid.

In a further implementation of the seeing aid of the first aspect, the machine learning unit is configured to learn a correspondence between an image of an object and a name of the object, wherein preferably the seeing aid is configured to control the machine learning unit to learn a correspondence between the image and the object if the pedestrian speaks the name while the cameras are pointed at the object.

It is understood that the neural network needs to be trained first in a training phase. This training can be performed both at the manufacturer of the seeing aid, in order to train the neural network to detect and/or describe common objects, such as plants, street signs, etc. In addition, training can also be performed by the user themselves. This can be seen as a refinement of the neural network, wherein the neural network learns to identify objects (herein including persons) that are familiar to the user. These can be for example friends and family of the user, as well as objects that the user owns, or places that are in the neighborhood of the user's home.

This implementation has the advantage that the seeing aid can learn information about the environment of the user. Herein, object may also refer to a person, for example the face of a person. For example, the seeing aid can learn names of the people that the user knows. The seeing aid can also learn names of locations or objects that are of importance for the user.

The learning can be fully automatic. For example, the seeing aid recognizes a specific object, for example a face of a person, this triggers the audio recording through the audio input and use of the recorded audio for training of the neural network.

The learning can also be triggered by the user pointing the camera(s) towards the object and then speaking the name of the object. Alternatively, the seeing aid can be provided with another input, for example a button, wherein the seeing aid is configured to learn the names of objects whenever the user triggers the other input, for example whenever the user pushes the button. In this way, the user can point the camera - towards an object, for example a bus stop that is relevant to the user, push the button and speak: "This is my bus stop". This has the advantage that such user triggered training of the neural network can receive higher weight and learning of the neural network can be much faster. Thus, in the future the seeing aid can, whenever the user is near the bus stop, notify the user about the bus stop, optionally retrieve information about the bus service from the internet through a wireless connection and e.g. notify the user of delays.

The seeing aid can be configured to learn to recognize named objects not only based on the images acquired with the camera(s), but by also considering a geographic location, e.g. based on a GPS location. For example, the seeing aid could learn that the image of a bus stop corresponds to "my bus stop" of the user only if the GPS location also corresponds to the GPS location of the user's bus stop. This can help the seeing aid not to confuse objects that look similar (e.g. bus stops in one city may have a similar design, thus be difficult to be distinguished based only on the camera image).

This person skilled in the art understands that different machine learning algorithms can be used to implement such functionality. For example, convolutional neural networks can be trained to learn a correspondence between an object as shown in image and a verbal description of the object. The convolutional neural network can, as additional input information, also make use of e.g. GPS coordinates.

In a further implementation, the seeing aid of the first aspect comprises a first camera configured to generate a first image and a second camera configured to generate a second image, wherein the processing unit is configured to process first and second image to generate an estimate of a distance of an object in the environment to the pedestrian. This has the advantage that the seeing aid can provide distance information without requiring dedicated distance sensors. It is understood that the seeing aid may additionally also comprise dedicated distance sensors, e.g. using ultrasound. These can allow the seeing aid to guide the pedestrian even when it is dark, i.e., when the camera(s) cannot provide sufficient information.

Preferably, the output unit is configured to generate a warning signal if the object is moving towards the pedestrian within a predetermined distance and/or with a velocity higher than a predetermined threshold velocity. Thus, the seeing aid can warn the user about potential dangers. Such warning signal may include Ambisonic audio.

In a further implementation of the seeing aid of the first aspect, the seeing aid further comprises a connectivity unit configured to connect to a geo-information service, wherein the geo-information service is configured to provide annotated images with corresponding locations. Preferably, the seeing aid comprises or is adapted to connect to a location determination unit such as a GPS sensor. Thus, the seeing aid may know the names of important places or objects near the location of the user. For example, the user may be near the train station, the seeing aid may obtain images of the train station from the geo-information service and when the user points the camera(s) towards the train station, the seeing aid notifies the user by generating audio output "You are looking at the train station".

The user can give the seeing aid a command, e.g. a voice command, to search a location and define a route for him. Then, the user can start the navigation by utilizing a further command, e.g. a further voice command. For example, if the user wants to go to the nearest supermarket, he can ask his seeing aid to find the nearest supermarket. The seeing aid will then search and locate the nearest few supermarkets and ask the user to choose one. Then navigation will start to guide him to the selected destination.

When determining a route for the user, the seeing aid can be configured to select a route that is suitable for a visually impaired person. For example, the seeing aid can be configured to select a route that avoids large streets or busy intersections. The seeing aid can be configured to obtain this information from a mapping service such as Google maps or Apple Maps.

In a further implementation of the seeing aid of the first aspect, the seeing aid is configured to perform optical character recognition, OCR, to recognize words and the output unit is configured to output speech corresponding to the recognized words. This allows the seeing aid to notify the users about the content of written information, e.g. street signs and even to read a book. As mentioned already above, the seeing aid can be configured to perform OCR only when in a reading mode. For example, when in the seeing mode, the seeing aid can describe objects based mainly on their color, shape, size and general appearance, whereas in reading mode the seeing aid would first describe words that it has identified in the environment.

In a typical environment on a street or in a city center, there may be many words that the seeing aid recognizes. These may include names of stores, street names and advertisements. The seeing aid can be configured to first inform the user about words that are known to have particular importance. For example, this may be based on a list of words, including e.g. the words "Warning", "Stop", "Forbidden". Thus, the user is immediately notified about words or signs that may warn him about an imminent danger.

In a further implementation of the seeing aid of the first aspect, the seeing aid is configured to connect to a face database, wherein the face database comprises a plurality of face images and corresponding names. This allows the seeing aid to notify the user about the names of persons even if the user does not know them. The connection to the face database may be for example over a wireless connection and/or over the Internet.

In a further implementation, the seeing aid comprises a fall detection unit, in particular a motion sensor, configured to detect a fall of the pedestrian. Blind or visually impaired people are at an increased risk of accidents such as falling over an object. Upon detecting a fall, the seeing aid can be configured to either directly perform a call for help, e.g. through the phone network, preferably by triggering a mobile phone to which the seeing aid is wirelessly connected (e.g. by Bluetooth or WiFi), or alternatively the seeing aid can first ask the pedestrian whether he or she is OK, and trigger a call to emergency services only if the user does not confirm that he or she is OK. This has the advantage that the emergency services can be contacted, even if the user is incapacitated and no longer capable of performing a phone call.

A second aspect of the invention provides a method for assisting a visually impaired pedestrian, the method comprising:
- recording an image of an environment of the pedestrian,
- processing the image to obtain information about the environment,
   - outputting the verbal information in order to notify the pedestrian about the environment, and
- record speech and/or verbal commands from the pedestrian,

wherein the method further comprises learning a correspondence between an image of an object and a name of the object,
wherein the method specifically comprises learning a correspondence between the image and the name of the object if the pedestrian speaks the name while the camera is pointed at the object.

The methods according to the second aspect of the invention can be performed by the seeing aid according to the first aspect of the invention. Further features or implementations of the method according to the second aspect of the invention can perform the functionality of the seeing aid according to the first aspect of the invention and its different implementation forms.

In implementations of the method of the second aspect, the method can comprise transmitting data between different components, for example, between a user-attached part and a mobile part, e.g. a smart phone, or between a user-attached part and a cloud-based part, or between a mobile part and a cloud-based part.

A further aspect of the invention refers to a computer-readable storage medium storing program code, the program code comprising instructions that when executed by a processor carry out the method of the second aspect or one of the implementations of the second aspect. The computer-readable storage medium may comprise instructions that are to be executed by different components of a seeing aid.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIGs. 1a and 1b: are two views of a seeing aid in accordance with an embodiment of the present invention,
- FIGs. 2a and 2b: are two views of another seeing aid in accordance with a further embodiment of the present invention,
- FIG. 3: is a schematic illustration of a use scenario of a seeing aid in accordance with an embodiment of the present invention,
- FIGs. 4a and 4b: are schematic illustrations of images as acquired by a camera of a seeing aid in accordance with the present invention,
- FIG. 5: is a schematic illustration of a further use scenario of a seeing aid in accordance with an embodiment of the present invention,
- FIG. 6: is a further use scenario of a seeing aid in accordance with an embodiment of the present invention, wherein the seeing aid comprises a user-attached part and a mobile part, and
- FIG. 7: is a schematic illustration of an administration application to be used in combination with the seeing aid in accordance with the present invention,
- FIG. 8: is a flow chart of a method in accordance with the present invention.

### DETAILED DESCRIPTION OF EMBODIMENTS

The following descriptions are only implementation manners of the present invention, the scope of the present invention is not limited to this. Any variations or replacements can be easily made through persons skilled in the art. Therefore, the protection scope of the present invention should be subject to the protection scope of the attached claims.

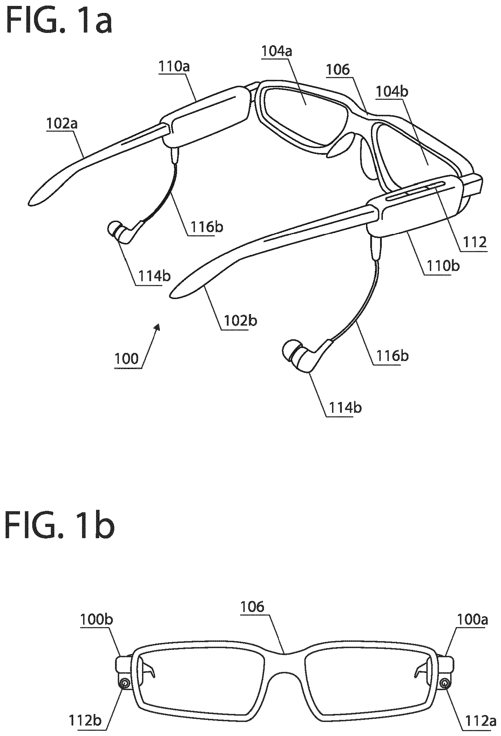

FIGs. 1a and 1b show a seeing aid in accordance with a first embodiment. The seeing aid of the first embodiment is a pair of glasses 100, wherein the pair of glasses comprises arms 102a,102b to be placed above the ears of the user and lenses 104a, 104b that are connected by a bridge 106.

Additionally, the glasses comprise, over each arm with endings 102a and 102b of the glasses a module 110a, 110b. As can be seen from the front view in FIG. 1a, the modules 100a, 100b comprise front facing cameras 112a, 112b. The cameras 102a and 102b may be parallel separated such that the processing unit can calculate a stereoscopic image. Furthermore, earphones 114a, 114b are connected to the modules 110a, 110b via cables 116a, 116b. The module 110b on the right side of the glasses comprises three buttons 112. These buttons can be used to switch on or off the seeing aid and to give specific further instructions. For example, one of the buttons 112 can be used to trigger the seeing aid to give a verbal description of a scene in front of the camera, as will be explained in more detail below.

The modules 110a, 110b also comprise processing units (not shown in FIG. 1). The processing units can comprise a positioning unit such as a GPS unit. The modules 110a, 110b can also comprise a connectivity unit that is configured to connect the seeing aid to WiFi and/or a mobile telecommunications network such as LTE.

The seeing aid can comprise a microphone so that the user can provide instructions to the seeing aid via voice commands that are recorded via the microphone (not shown in FIGs. 1a and 1b). Alternatively or additionally, the seeing aid can comprise a motion sensor so that the seeing aid can detect head movements such as nodding or shaking. For example, the seeing aid can be configured to ask the user whether he or she wants to switch a vision mode, e.g. whether he or she wants to switch from seeing mode to reading mode. The seeing aid can then detect a response by detecting whether the user nods or shakes the head.

Alternatively or additionally, the seeing aid can be configured to detect whether the user blinks with the eyes as a way of obtaining commands from the user. For example, the seeing aid can be configured to detect a double blink, e.g. if the user blinks at least twice within a predetermined time, e.g. with one second. For example, the seeing aid can be configured to switch between the modes when the user performs a double blink. Even persons who are fully blind can usually still blink with their eyes. Thus, an additional, simple way of controlling the seeing aid is provided.

Detecting the blinking can be performed by having an additional camera that is located within the glasses and directed not at the environment, but at one of the eyes of the user. Images obtained from the additional camera can be fed into a convolutional neural network that has been trained to distinguish a position of closed eyes and a position of open eyes. The training can have been performed with images from a training set with closed eyes / open eyes from a large number of persons. Alternatively or additionally, training can be performed by asking the current user of the seeing aid to close his eyes and subsequently open his eyes, so that the convolutional neural network can be trained with images obtained from the current user.

Alternatively, instead of training a convolutional neural network, the seeing aid can be configured to detect a blinking of the user by detecting a motion of a significant portion of the image acquired with the additional camera. For example, optical flow methods can be used to detect motion (and to distinguish an eyelid motion from e.g. a change in illumination).

It is understood that there can be one additional camera directed at one eye or there can be two additional cameras, each directed at one of the eyes of the user.

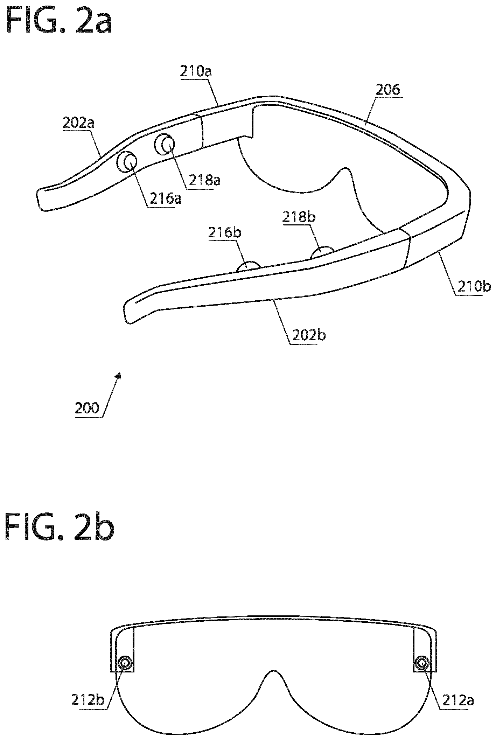

FIGs. 2a and 2b show a seeing aid 200 in accordance with a further embodiment of the present invention. This seeing aid 200 is also designed as a pair of glasses that uses a different design compared to the glasses 100 shown in FIGs. 1a and 1b. Herein, the cameras 212a, 212b and the processing unit (not shown) are integrated into the front parts 210a, 210b of the arms 202a, 202b of the glasses 200. Thus, the camera component of the seeing aid 200 is not immediately visible.

Furthermore, the glasses comprise two vibration units 216a, 218a that are located on the left arm 202a and two vibration units 216b, 218b that are located on the right arm 202b of the glasses 200. The vibration units 216a, 216b, 218a, 218b are connected through electric wiring, located inside the arms 202a, 202b, electrically connected to a control unit (not shown), which is connected to the processing unit (not shown) of the seeing aid 200. Components of the glasses 100 may be combined with the glasses 200 shown in FIG. 1a and FIG. 1b. The vibration units 216a, 216b, 218a, 218b may be bone conduction transducers or only one of the two vibration units on each side is a bone conduction transducer and may in addition form part of audio output unit.

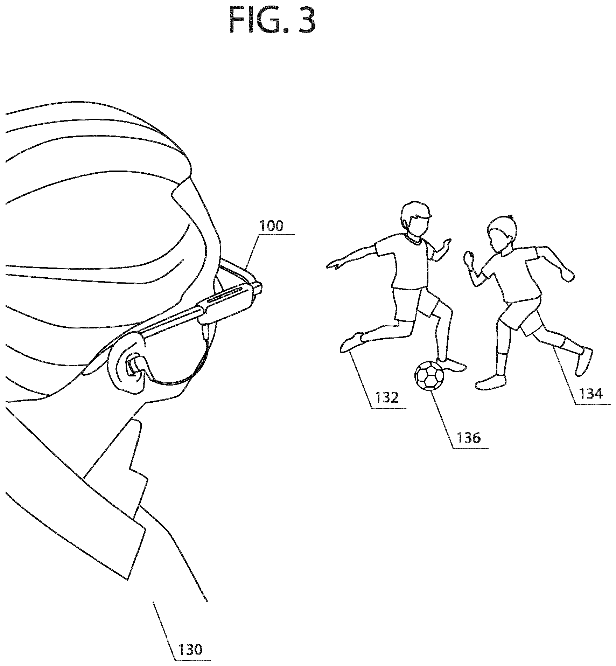

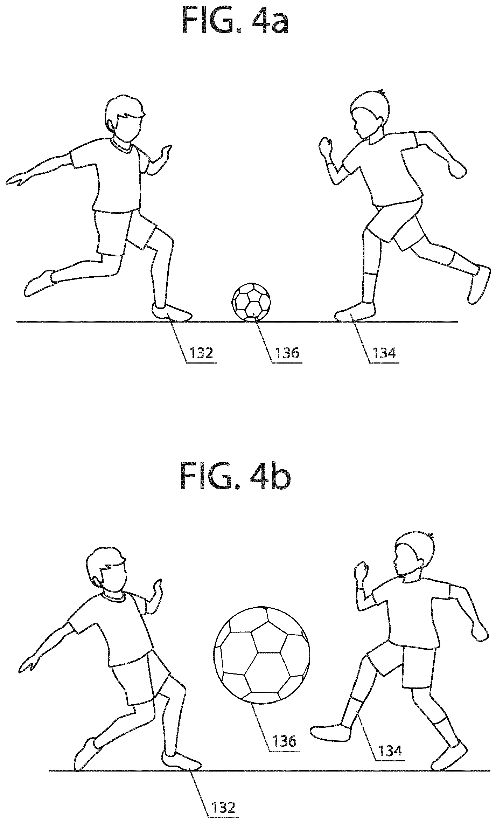

FIG. 3 shows a pedestrian 130 who is wearing seeing aid 100 and who is watching a scene. In particular, the user is facing a scene where two children 132, 134 are playing with a football 136. The camera of the seeing aid 100 is recording an image similar to what is shown in FIG. 4a. As the second child 134 kicks the ball towards the pedestrian 130, the ball 136 comes closer to the camera of the seeing aid 100 and thus takes up a larger portion of the image, as shown in FIG. 4b. The processing unit of the seeing aid detects that the same object is becoming larger and larger in the image and thus can that this is because the object is moving towards the seeing aid. This can be more accurately calculated, i.e. a movement trajectory, with the help of stereoscopic information obtained by combining the image with an image from a second camera of the seeing aid 100. The seeing aid generates a warning, for example an audio signal, such as e.g. an Ambisonic audio signal, to warn the pedestrian about the danger.

If the seeing aid recognizes a danger, e.g., a car or a fast-moving object such as a football, the seeing aid can be configured to navigate the pedestrian to avoid the danger. For example, when the user has previously initiated a navigation mode, the seeing aid can be configured to change a previously determined route such that the pedestrian is navigated around the danger. The seeing aid can be configured to inform the pedestrian about the root change. For example, a message can be output from the audio output unit, telling the pedestrian: "Danger detected, please turn right!" Thus, the seeing aid can help the pedestrian navigate safely even in a dangerous environment.

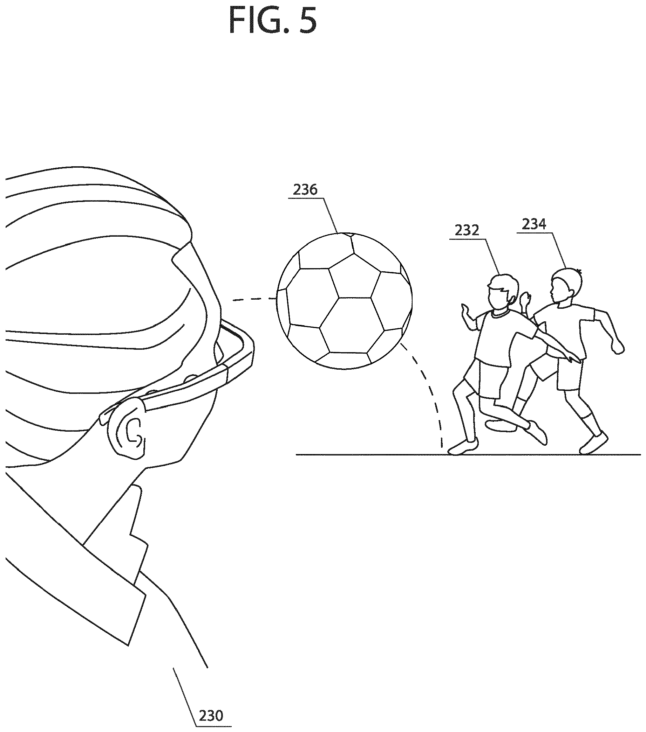

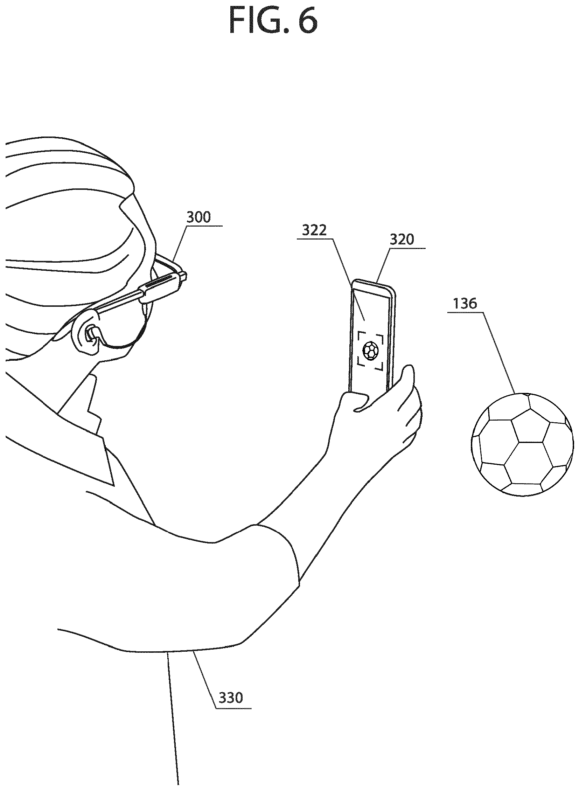

FIG. 5 shows another pedestrian 230 wearing another seeing aid 200, and also watching a scene of children 232, 234 playing with a football, which is suddenly kicked towards the pedestrian. Seeing aid 200 comprises vibration units, which are provided instead of or in addition to an audio output unit. The seeing aid 200 is configured to warn the pedestrian by causing the vibration units to vibrate. In addition to the vibration units, the seeing aid 200 also comprises an audio output unit, not shown in FIG. 5. Preferably, both the vibration units and the audio output unit can be configured to warn the pedestrian about imminent dangers. FIG. 6 shows a further pedestrian 330 who is wearing a seeing aid 300 in accordance with another embodiment. The seeing aid 300 is using a transmitter and receiver (not shown in FIG. 6) to communicate wirelessly with the mobile phone 320. The mobile phone 320 comprises a processing unit (not shown) and a display 322. The display in FIG. 6 shows the football 136 that the camera of the mobile phone is recording. In other embodiments, the display may be switched off to save battery. The user may trigger the mobile phone 320 to provide a description of the object in front of the lens of the mobile phone 320 by putting a button, e.g. a virtual button on the display 322 of the mobile phone. Virtual buttons that are only visually indicated on the screen of the mobile phone may be difficult to operate for users who are blind or visually impaired. Thus, the mobile phone 320 can preferably be configured to receive commands from the user by recognizing gestures such as a sudden movement of the mobile phone or provide tactile feedback. For example, the mobile phone 320 may be configured to recognize a shaking or a sudden forward-backward tilting of the mobile phone 320 as a signal that it should provide information about an object that is currently in front of the camera of the mobile phone. Thus, the seeing aid 300 can switch from providing a description of the scene, as seen from the cameras that are integrated into the glasses to providing a description of an image is acquired from the mobile phone 320. The processing unit may execute program instruction in a background process of the multi-tasking operating system of the mobile phone, such that the processing unit is entirely invisible to the user

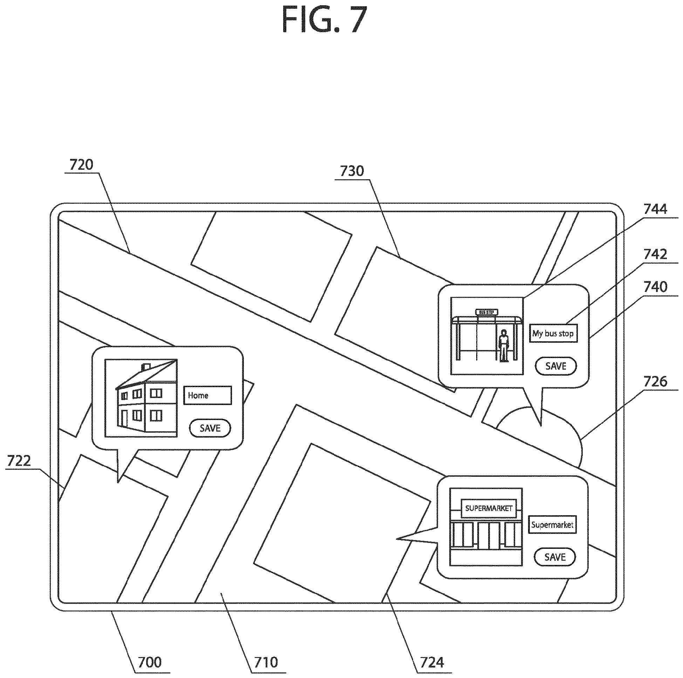

FIG. 7 shows an administration application that can be run e.g. on a tablet computer 700, such as an iPad. The administration application can be used to visualize information of the seeing aid. It is understood that the user may be blind or have a strong vision impairment and thus may not be able to see the tablet application. However, the user may have a trusted person who can use the administration application to verify the information stored and available to the seeing aid. For example, the blind person may assign names to buildings or locations that are important to him by speaking into a microphone of the seeing aid. However, because of noise, e.g. on the street, the seeing aid may not correctly understand the name. Thus, it may be necessary to verify and correct the user-specific information.

The tablet application shows a map 710 of an area where the user often goes for a walk. The map 710 shows streets 720 and buildings 730. In particular, the buildings include the home 722 of the user, a supermarket 724, and the bus stop 726 of the user. For each of the relevant locations, the administration application may show a pop-up window 740, which comprises a text field 742, which allows a user to enter a name for this location. Additionally, an image 744 of the location, as acquired using the camera of the seeing aid, is shown, so that the user can verify this building or location. The administration application can also be used to verify the acquired image of the different locations and to delete unsuitable images. For example, the blind person may have been moving or shaking when using the seeing aid to acquire an image of the building or location. Hence, the image may be blurry and unsuitable to be used by the seeing aid for recognizing a building or location.

The administration application can be configured to directly connect to the seeing aid and show information stored on the seeing aid. Alternatively, the user-specific information can be stored in the cloud and both the seeing aid and the administration application can be configured to access the user-specific information in the cloud. This has the advantage that, if the seeing aid is lost or damaged, the user-specific information (which may have been acquired over a long time) is still available.

The seeing aid and the administration application can be configured to work together as a system.

The administration application may be configured to indicate a location of the user. Thus, an authorized third party can see where the blind person is currently located. This can be helpful for example if the blind person suddenly requires help from a third person, but cannot describe his current location.

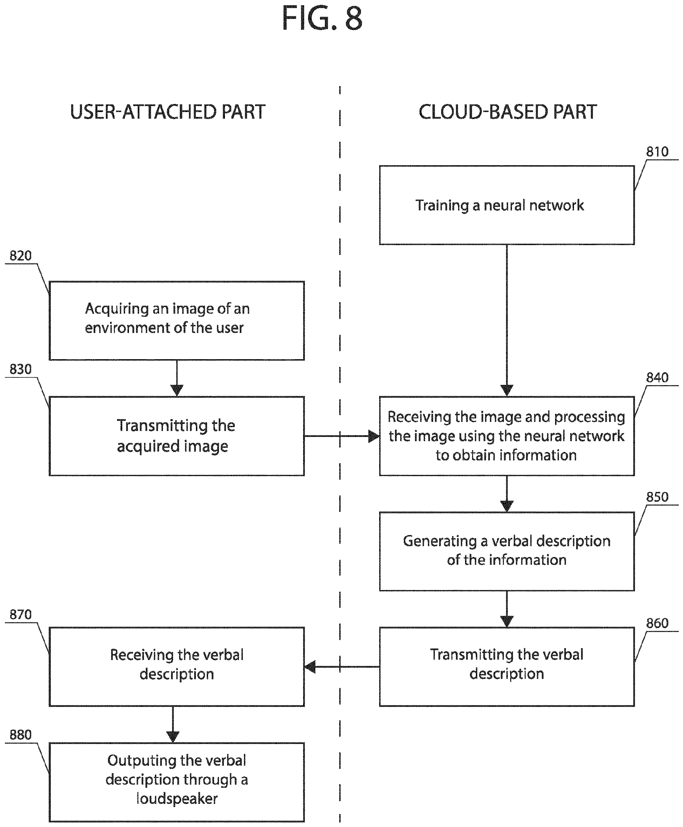

FIG. 8 is a flow chart of a method in accordance with an embodiment. In this embodiment, the seeing aid comprises a user-attached part (for example, the glasses) and a cloud-based part, where a neural network uses the cloud resources to perform the processing of the images that were obtained with the camera of the user-attached part.

The method comprises a first step 810 of training a neural network of a centrally-provided processing unit. This first step may have been performed once for all users of the seeing aid. Additionally, user-specific training may have been performed.

In a second step 820, which is performed after the training, an image of an environment of the user is acquired by the user-attached part of the seeing aid, for example by a camera integrated into the glasses. In step 830, the acquired image is transmitted from the user-attached part of the seeing aid towards the cloud-based part of the seeing aid. In the cloud-based part, in a further step 840 the image is received and processed to obtain information about the environment. In a subsequent step 850, a verbal description of the information is generated and in step 860, the verbal description is transmitted to the user-attached part of the seeing aid. In step 870, the verbal description is received at the user-attached part of the seeing aid and in step 880, the verbal description is output through the output unit, such as e.g. a loudspeaker.

## Claims

1. A seeing aid (100, 200, 300) for a visually impaired pedestrian (130, 230, 330),
wherein the seeing aid (100, 200, 300) comprises:
- a camera (102a, 102b, 212a, 212b) for recording an image of an environment of the pedestrian (130, 230, 330),
- a processing unit adapted for processing the image to obtain verbal information about the environment, and
- an output unit for outputting the verbal information in order to notify the pedestrian (130, 230, 330) about the environment,
wherein the processing unit comprises a machine learning unit configured to learn a correspondence between an image of an object and a name of the object,
wherein the seeing aid further comprises an audio input unit configured to record speech and/or verbal commands from the pedestrian (130, 230, 330),
**characterized in that** the seeing aid is configured to control the machine learning unit to learn a correspondence between the image and the name of the object if the pedestrian speaks the name while the camera (102a, 102b, 212a, 212b) is pointed at the object.

2. The seeing aid (100, 200, 300) of claim 1, wherein the seeing aid (100, 200, 300) is designed to be worn as glasses or wherein the seeing aid (100, 200, 300) is designed to be attached to a pair of glasses.

3. The seeing aid (100, 200, 300) of claim 1 or 2, wherein the output unit comprises an audio output unit, the audio output unit preferably comprising one of earphones, a hearing aid, a cochlear implant, and a bone conduction transducer or implant, wherein in particular the verbal information comprises a textual description of a scene in the environment, and wherein the audio output unit is configured to generate speech output corresponding to the textual description.

4. The seeing aid (100, 200, 300) of claim 2 or 3, wherein the audio output unit is configured to
- generate ambisonic audio, wherein the ambisonic audio gives the pedestrian (130, 230, 330) the impression of sound coming from a direction that corresponds to a direction of a detected object relative to the pedestrian (130, 230, 330), and/or
- generate an audio signal where a frequency and/or a volume of the audio signal corresponds to a size and/or a proximity of a detected object relative to the pedestrian (130, 230, 330).

5. The seeing aid (100, 200, 300) of one of the previous claims, wherein the output unit comprises a plurality of vibration units (216a, 216b, 218a, 218b), wherein the seeing aid (100, 200, 300) is configured to notify the pedestrian (130, 230, 330) about a position of an object relative to the pedestrian (130, 230, 330) by controlling the plurality of vibration units (216a, 216b, 218a, 218b),
wherein in particular an intensity of vibration of one or more of the plurality of vibration units (216a, 216b, 218a, 218b) corresponds to a size and/or proximity of an object that the processing unit has detected in the image,
wherein preferably the plurality of vibration units (216a, 216b, 218a, 218b) are arranged such that when the seeing aid (100, 200, 300) is in place, they form a circle around the head of the pedestrian (130, 230, 330).

6. The seeing aid (100, 200, 300) of one of the previous claims, further comprising a positioning unit for obtaining a current position of the seeing aid, and a navigation unit configured to determine a navigation route, wherein preferably the seeing aid is configured to determine a route to a location that the user has spoken into the audio input unit, wherein in particular the seeing aid is configured to output navigation instructions to the pedestrian via the audio output unit.

7. The seeing aid (100, 200, 300) of one of the previous claims, further comprising an infrared camera and/or an ultrasound proximity sensor, wherein the processing unit is configured to use information from the infrared camera and/or the ultrasound proximity sensor to determine objects and or provide navigation information even in darkness.

8. The seeing aid (100, 200, 300) of one of the previous claims, wherein the machine learning unit is configured to learn a correspondence between an image of an object and a name of the object, wherein preferably the seeing aid (100, 200, 300) is configured to control the machine learning unit to learn a correspondence between the image and the object if the pedestrian (130, 230, 330) speaks the name while the cameras (102a, 102b, 212a, 212b) are pointed at the object
wherein preferably the seeing aid is configured to determine a position of the seeing aid and is configured to process the position in combination with the image.

9. The seeing aid (100, 200, 300) of one of the previous claims, comprising a first camera (102a, 102b, 212a, 212b) configured to generate a first image and a second camera (102a, 102b, 212a, 212b) configured to generate a second image, wherein the processing unit is configured to process first and second image to generate an estimate of a distance of an object in the environment to the pedestrian (130, 230, 330), wherein preferably the output unit is configured to generate a warning signal if the object is moving towards the pedestrian (130, 230, 330) within a predetermined distance and/or with a velocity higher than a predetermined threshold velocity.

10. The seeing aid (100, 200, 300) of one of the previous claims, further comprising a location determination unit and a connectivity unit configured to connect to a geo-information service, wherein the geo-information service is configured to provide annotated images with corresponding locations.

11. The seeing aid (100, 200, 300) of one of the previous claims, wherein
- the processing unit is configured to perform optical character recognition, OCR, to recognize words and the output unit is configured to output speech corresponding to the recognized words, and/or
- wherein the processing unit is configured to connect to a face database, wherein the face database comprises a plurality of face images and corresponding names.

12. The seeing aid (100, 200, 300) of one of the previous claims, further comprising a fall detection unit, in particular a motion sensor, configured to detect a fall of the pedestrian (130, 230, 330).

13. A computer-implemented method for assisting a visually impaired pedestrian (130, 230, 330), the method comprising:
- recording (720) an image of an environment of the pedestrian (130, 230, 330),
- processing (740) the image to obtain verbal information about the environment,
- outputting (780) the verbal information in order to notify the pedestrian (130, 230, 330) about the environment, and
- record speech and/or verbal commands from the pedestrian,
wherein the method further comprises learning a correspondence between an image of an object and a name of the object,
**characterized in that** the method specifically comprises learning a correspondence between the image and the name of the object if the pedestrian speaks the name while the camera is pointed at the object.

14. A computer-readable storage medium storing program code, the program code comprising instructions that when executed by a processor carry out the method of claim 13.

## Patentansprüche

1. Sehhilfe (100, 200, 300) für einen sehbehinderten Fußgänger (130, 230, 330), wobei die Sehhilfe (100, 200, 300) umfasst:
- eine Kamera (102a, 102b, 212a, 212b) zum Aufnehmen eines Bilds einer Umgebung des Fußgängers (130, 230, 330),
- eine Verarbeitungseinheit, die zum Verarbeiten des Bilds ausgelegt ist, um verbale Informationen über die Umgebung zu erhalten, und
- eine Ausgabeeinheit zum Ausgeben der verbalen Informationen, um den Fußgänger (130, 230, 330) über die Umgebung zu benachrichtigen,
wobei die Verarbeitungseinheit eine Maschinenlerneinheit umfasst, die konfiguriert ist, eine Korrespondenz zwischen einem Bild eines Objekts und einem Namen des Objekts zu lernen,
wobei die Sehhilfe ferner eine Audioeingabeeinheit umfasst, die konfiguriert ist, um Sprach- und/oder verbale Befehle von dem Fußgänger (130, 230, 330) aufzuzeichnen, **dadurch gekennzeichnet, dass** die Sehhilfe konfiguriert ist, die Maschinenlerneinheit zu steuern, eine Korrespondenz zwischen dem Bild und dem Namen des Objekts zu lernen, wenn der Fußgänger den Namen spricht, während die Kamera (102a, 102b, 212a, 212b) auf das Objekt gerichtet ist.

2. Sehhilfe (100, 200,300) nach Anspruch 1, wobei die Sehhilfe (100, 200, 300) ausgelegt ist, um als Brille getragen zu werden, oder wobei die Sehhilfe (100, 200, 300) ausgelegt ist, um an einer Brille angebracht zu werden.

3. Sehhilfe (100, 200, 300) nach Anspruch 1 oder 2, wobei die Ausgabeeinheit eine Audioausgabeeinheit umfasst, wobei die Audioausgabeeinheit vorzugsweise eines von Kopfhörern, einer Hörhilfe, einem Cochlea-Implantat und einem Knochenleitungs-Wandler oder Implantat umfasst,
wobei insbesondere die verbalen Informationen eine Textbeschreibung einer Szene in der Umgebung umfassen, und wobei die Audioausgabeeinheit konfiguriert ist, eine Sprachausgabe zu erzeugen, die der Textbeschreibung entspricht.

4. Sehhilfe (100, 200, 300) nach Anspruch 2 oder 3, wobei die Audioausgabeeinheit konfiguriert ist, um
- ambisonisches Audio zu erzeugen, wobei das ambisonische Audio dem Fußgänger (130, 230, 330) den Eindruck von Schall vermittelt, der aus einer Richtung kommt, die einer Richtung eines erfassten Objekts relativ zu dem Fußgänger (130, 230, 330) entspricht, und/oder
- ein Audiosignal zu erzeugen, wobei eine Frequenz und/oder eine Lautstärke des Audiosignals einer Größe und/oder einer Nähe eines erfassten Objekts relativ zu dem Fußgänger (130, 230, 330) entspricht.

5. Sehhilfe (100, 200, 300) nach einem der vorhergehenden Ansprüche, wobei die Ausgabeeinheit eine Mehrzahl von Vibrationseinheiten (216a, 216b, 218a, 218b) umfasst, wobei die Sehhilfe (100, 200, 300) konfiguriert ist, um den Fußgänger (130, 230, 330) durch Steuern der Mehrzahl von Vibrationseinheiten (216a, 216b, 218a, 218b) über eine Position eines Objekts relativ zu dem Fußgänger (130, 230,330) zu benachrichtigen, wobei insbesondere eine Intensität einer Vibration von einer oder mehreren der Mehrzahl von Vibrationseinheiten (216a, 216b, 218a, 218b) einer Größe und/oder einer Nähe eines Objekts entspricht, das die Verarbeitungseinheit im Bild erfasst hat,
wobei vorzugsweise die Mehrzahl von Vibrationseinheiten (216a, 216b, 218a, 218b) so angeordnet ist, dass sie, wenn die Sehhilfe (100, 200, 300) an ihrem Platz ist, einen Kreis um den Kopf des Fußgängers (130, 230, 330) bilden.

6. Sehhilfe (100, 200, 300) nach einem der vorhergehenden Ansprüche, ferner umfassend eine Positionierungseinheit zum Erhalten einer aktuellen Position der Sehhilfe und eine Navigationseinheit, die konfiguriert ist, eine Navigationsroute zu bestimmen, wobei vorzugsweise die Sehhilfe konfiguriert ist, eine Route zu einem Ort zu bestimmen, an dem der Benutzer in die Audioeingabeeinheit gesprochen hat, wobei insbesondere die Sehhilfe konfiguriert ist, Navigationsanweisungen über die Audioausgabeeinheit an den Fußgänger auszugeben.

7. Sehhilfe (100, 200, 300) nach einem der vorhergehenden Ansprüche, ferner umfassend eine Infrarotkamera und/oder einen Ultraschallnäherungssensor, wobei die Verarbeitungseinheit konfiguriert ist, Informationen von der Infrarotkamera und/oder dem Ultraschallnäherungssensor zu verwenden, Objekte zu bestimmen und/oder Navigationsinformationen auch bei Dunkelheit bereitzustellen.

8. Sehhilfe (100, 200, 300) nach einem der vorhergehenden Ansprüche, wobei die Maschinenlerneinheit konfiguriert ist, eine Korrespondenz zwischen einem Bild eines Objekts und einem Namen des Objekts zu lernen, wobei vorzugsweise die Sehhilfe (100, 200, 300) konfiguriert ist, die Maschinenlerneinheit zu steuern, eine Korrespondenz zwischen dem Bild und dem Objekt zu lernen, wenn der Fußgänger (130, 230, 330) den Namen spricht, während die Kameras (102a, 102b, 212a, 212b) auf das Objekt gerichtet sind,
wobei vorzugsweise die Sehhilfe konfiguriert ist, eine Position der Sehhilfe zu bestimmen, und konfiguriert ist, die Position in Kombination mit dem Bild zu verarbeiten.

9. Sehhilfe (100, 200, 300) nach einem der vorhergehenden Ansprüche, umfassend eine erste Kamera (102a, 102b, 212a, 212b), die konfiguriert ist, ein erstes Bild zu erzeugen, und eine zweite Kamera (102a, 102b, 212a, 212b), die konfiguriert ist, ein zweites Bild zu erzeugen, wobei die Verarbeitungseinheit konfiguriert ist, ein erstes und zweites Bild zu verarbeiten, um eine Schätzung eines Abstands eines Objekts in der Umgebung zu dem Fußgänger (130, 230, 330) zu erzeugen, wobei vorzugsweise die Ausgabeeinheit konfiguriert ist, um ein Warnsignal zu erzeugen, wenn sich das Objekt innerhalb eines vorbestimmten Abstands und/oder mit einer Geschwindigkeit, die höher als eine vorbestimmte Schwellengeschwindigkeit ist, in Richtung des Fußgängers (130, 230, 330) bewegt.

10. Sehhilfe (100, 200, 300) nach einem der vorhergehenden Ansprüche, ferner umfassend eine Positionsbestimmungseinheit und eine Konnektivitätseinheit, die konfiguriert ist, um sich mit einem Geoinformationsdienst zu verbinden, wobei der Geoinformationsdienst konfiguriert ist, um kommentierte Bilder mit entsprechenden Positionen bereitzustellen.

11. Sehhilfe (100, 200, 300) nach einem der vorhergehenden Ansprüche, wobei
- die Verarbeitungseinheit konfiguriert ist, eine optische Zeichenerkennung, OCR, durchzuführen, um Wörter zu erkennen, und die Ausgabeeinheit konfiguriert ist, Sprache auszugeben, die den erkannten Wörtern entspricht, und/oder
- wobei die Verarbeitungseinheit konfiguriert ist, um sich mit einer Gesichtsdatenbank zu verbinden, wobei die Gesichtsdatenbank eine Mehrzahl von Gesichtsbildern und entsprechenden Namen umfasst.

12. Sehhilfe (100, 200, 300) nach einem der vorhergehenden Ansprüche, ferner umfassend eine Sturzerfassungseinheit, insbesondere einen Bewegungssensor, der konfiguriert ist, um einen Sturz des Fußgängers (130, 230, 330) zu erfassen.

13. Computerimplementiertes Verfahren zum Unterstützen eines sehbehinderten Fußgängers (130, 230, 330), wobei das Verfahren umfasst:
- Aufnehmen (720) eines Bilds einer Umgebung des Fußgängers (130, 230, 330),
- Verarbeiten (740) des Bilds, um verbale Informationen über die Umgebung zu erhalten,
- Ausgeben (780) der verbalen Informationen, um den Fußgänger (130, 230, 330) über die Umgebung zu benachrichtigen, und
- Aufzeichnen von Sprach- und/oder verbalen Befehlen vom Fußgänger,
wobei das Verfahren ferner das Lernen einer Korrespondenz zwischen einem Bild eines Objekts und einem Namen des Objekts umfasst,
**dadurch gekennzeichnet, dass** das Verfahren insbesondere das Lernen einer Korrespondenz zwischen dem Bild und dem Namen des Objekts umfasst, wenn der Fußgänger den Namen spricht, während die Kamera auf das Objekt gerichtet ist.

14. Ein computerlesbares Speichermedium, das Programmcode speichert, wobei der Programmcode Anweisungen umfasst, die, wenn sie von einem Prozessor ausgeführt werden, das Verfahren nach Anspruch 13 ausführen.

## Revendications

1. Aide visuelle (100, 200, 300) pour un piéton malvoyant (130, 230, 330), dans laquelle l'aide visuelle (100, 200, 300) comprend :
- une caméra (102a, 102b, 212a, 212b) pour enregistrer une image d'un environnement du piéton (130, 230, 330) ;
- une unité de traitement apte à traiter l'image afin d'obtenir des informations verbales sur l'environnement ; et
- une unité de sortie pour fournir en sortie les informations verbales afin d'informer le piéton (130, 230, 330) concernant l'environnement ;
dans laquelle l'unité de traitement comprend une unité d'apprentissage automatique configurée de manière à apprendre une correspondance entre une image d'un objet et un nom de l'objet ;
dans laquelle l'aide visuelle comprend en outre une unité d'entrée audio configurée de manière à enregistrer des instructions vocales et/ou verbales provenant du piéton (130,230,330) ;
**caractérisée en ce que** l'aide visuelle est configurée de manière à commander à l'unité d'apprentissage automatique d'apprendre une correspondance entre l'image et le nom de l'objet si le piéton prononce le nom tandis que la caméra (102a, 102b, 212a, 212b) est pointée sur l'objet.

2. Aide visuelle (100, 200, 300) selon la revendication 1, dans laquelle l'aide visuelle (100, 200, 300) est conçue pour être portée comme des lunettes ou dans laquelle l'aide visuelle (100, 200, 300) est conçue pour être fixée à une paire de lunettes.

3. Aide visuelle (100, 200, 300) selon la revendication 1 ou 2, dans laquelle l'unité de sortie comprend une unité de sortie audio, l'unité de sortie audio comprenant de préférence l'un des éléments parmi des écouteurs, une prothèse auditive, un implant cochléaire, et un transducteur ou un implant à conduction osseuse, dans laquelle, en particulier les informations verbales comprennent une description textuelle d'une scène dans l'environnement, et dans laquelle l'unité de sortie audio est configurée de manière à générer une sortie vocale correspondant à la description textuelle.

4. Aide visuelle (100, 200, 300) selon la revendication 2 ou 3, dans laquelle l'unité de sortie audio est configurée de manière à :
- générer un contenu audio ambiophonique, dans lequel le contenu audio ambiophonique donne au piéton (130, 230, 330) l'impression d'un son provenant d'une direction qui correspond à une direction d'un objet détecté par rapport au piéton (130, 230, 330) ; et/ou
- générer un signal audio où une fréquence et/ou un volume du signal audio correspondent à une taille et/ou une proximité d'un objet détecté par rapport au piéton (130, 230, 330).

5. Aide visuelle (100, 200, 300) selon l'une quelconque des revendications précédentes, dans laquelle l'unité de sortie comprend une pluralité d'unités vibrantes (216a, 216b, 218a, 218b), dans laquelle l'aide visuelle (100, 200, 300) est configurée de manière à notifier au piéton (130, 230, 330) une position d'un objet par rapport au piéton (130, 230, 330), en commandant la pluralité d'unités vibrantes (216a, 216b, 218a, 218b),
dans laquelle, en particulier, une intensité de vibration d'une ou plusieurs unités de la pluralité d'unités vibrantes (216a, 216b, 218a, 218b) correspond à une taille et/ou une proximité d'un objet que l'unité de traitement a détecté dans l'image ;
dans laquelle, de préférence, les unités de la pluralité d'unités vibrantes (216a, 216b, 218a, 218b) sont agencées de sorte que, lorsque l'aide visuelle (100, 200, 300) est en place, les unités vibrantes forment un cercle autour de la tête du piéton (130, 230, 330).

6. Aide visuelle (100, 200, 300) selon l'une quelconque des revendications précédentes, comprenant en outre une unité de positionnement pour obtenir une position en cours de l'aide visuelle, et une unité de navigation configurée de manière à déterminer un itinéraire de navigation, dans laquelle, de préférence, l'aide visuelle est configurée de manière à déterminer un itinéraire vers un emplacement que l'utilisateur a prononcé dans l'unité d'entrée audio, dans laquelle, en particulier, l'aide visuelle est configurée de manière à fournir en sortie des instructions de navigation, au piéton, par l'intermédiaire de l'unité de sortie audio.

7. Aide visuelle (100, 200, 300) selon l'une quelconque des revendications précédentes, comprenant en outre une caméra infrarouge et/ou un capteur de proximité à ultrasons, dans laquelle l'unité de traitement est configurée de manière à utiliser des informations provenant de la caméra infrarouge et/ou du capteur de proximité à ultrasons en vue de déterminer des objets et/ou de fournir des informations de navigation, y compris dans l'obscurité.

8. Aide visuelle (100, 200, 300) selon l'une quelconque des revendications précédentes, dans laquelle l'unité d'apprentissage automatique est configurée de manière à apprendre une correspondance entre une image d'un objet et un nom de l'objet, dans laquelle, de préférence, l'aide visuelle (100, 200, 300) est configurée de manière à commander, à l'unité d'apprentissage automatique, d'apprendre une correspondance entre l'image et l'objet, si le piéton (130, 230, 330) prononce le nom tandis que les caméras (102a, 102b, 212a, 212b) sont pointées sur l'objet ;
dans laquelle, de préférence, l'aide visuelle est configurée de manière à déterminer une position de l'aide visuelle et est configurée de manière à traiter la position en combinaison avec l'image.

9. Aide visuelle (100, 200, 300) selon l'une quelconque des revendications précédentes, comprenant une première caméra (102a, 102b, 212a, 212b) configurée de manière à générer une première image, et une seconde caméra (102a, 102b, 212a, 212b) configurée de manière à générer une seconde image, dans laquelle l'unité de traitement est configurée de manière à traiter la première image et la seconde image en vue de générer une estimation d'une distance d'un objet dans l'environnement par rapport au piéton (130, 230, 330), dans laquelle, de préférence, l'unité de sortie est configurée de manière à générer un signal d'avertissement si l'objet se déplace vers le piéton (130, 230, 330) au sein d'une distance prédéterminée et/ou avec une vitesse supérieure à une vitesse de seuil prédéterminée.

10. Aide visuelle (100, 200, 300) selon l'une quelconque des revendications précédentes, comprenant en outre une unité de détermination d'emplacement et une unité de connectivité configurées de manière à se connecter à un service de géo-information, dans lequel le service de géo-information est configuré de manière à fournir des images annotées avec des emplacements correspondants.

11. Aide visuelle (100, 200, 300) selon l'une quelconque des revendications précédentes, dans laquelle :
- l'unité de traitement est configurée de manière à mettre en œuvre une reconnaissance optique de caractères, OCR, en vue de reconnaître des mots, et l'unité de sortie est configurée de manière à fournir en sortie une parole correspondant aux mots reconnus ; et/ou
- dans laquelle l'unité de traitement est configurée de manière à se connecter à une base de données de visages, dans laquelle la base de données de visages comprend une pluralité d'images de visages et de noms correspondants.

12. Aide visuelle (100, 200, 300) selon l'une quelconque des revendications précédentes, comprenant en outre une unité de détection de chute, en particulier un capteur de mouvement, configurée de manière à détecter une chute du piéton (130, 230,330).

13. Procédé mis en œuvre par ordinateur pour assister un piéton malvoyant (130, 230, 330), le procédé comprenant les étapes ci-dessous consistant à :
- enregistrer (720) une image d'un environnement du piéton (130, 230, 330) ;
- traiter (740) l'image en vue d'obtenir des informations verbales sur l'environnement ;
- fournir en sortie (780) les informations verbales afin d'informer le piéton (130, 230, 330) en ce qui concerne l'environnement ; et
- enregistrer des instructions vocales et/ou verbales provenant du piéton ; dans lequel le procédé comprend en outre l'étape consistant à apprendre une correspondance entre une image d'un objet et un nom de l'objet ;
**caractérisé en ce que** le procédé comprend spécifiquement l'étape consistant à apprendre une correspondance entre l'image et le nom de l'objet si le piéton prononce le nom tandis que la caméra est pointée sur l'objet.

14. Support de stockage lisible par ordinateur stockant un code de programme, le code de programme comprenant des instructions qui, lorsqu'elles sont exécutées par un processeur, mettent en œuvre le procédé selon la revendication 13.
